# EUROPEAN PATENT SPECIFICATION

(11) **EP 1 832 515 B1**
(45) Date of publication and mention of the grant of the patent: **29.10.2008**
(21) Application number: 06124792.0
(22) Date of filing: 27.11.2006
(51) Int. Cl.: B65B 9/13

(54) **Improvements to a structure for the opening wide of a wrapping apparatus using a tubular plastic bag**
Vorrichtung zum Aufweiten eines Apparats zum Überziehen von Gegenständen mit einer schlauchförmigen Plastikhaube
Dispositif pour élargir un appareil utilisé pour recouvrir des objets à l'aide d'une housse en film plastique

(30) Priority: 06.03.2006 IT MI20060080 U
(43) Date of publication of application: 12.09.2007
(73) Proprietor: OFFICINA MECCANICA SESTESE S.p.A., 28045 Paruzzaro (Novara) (IT)
(72) Inventor: ORFANO, Maurizio, 28041, ARONA (NOVARA) (IT)
(74) Representative: Faggioni, Carlo Maria

(56) References cited:
- EP-A1- 1 510 460

## Description

The present invention concerns improvements to a structure for the opening wide of a wrapping apparatus, in particular a wrapping apparatus employing wrapping bags turned inside-out.

The general principle of apparatuses wrapping pallet-stacked loads is the following: a pallet-stacked load is brought into a wrapping position in the middle of a main support frame of a wrapping apparatus. A wrapping film made of plastic material, of a tubular shape but folded longitudinally on a plane in order to be wound on a feeding roll, is guided from a position at the bottom of said main support frame to a position above the top of the pallet-stacked load, then made to descend and at the same time opened at the lower mouth thereof so as to form a bag. The resulting bag is firstly separated from the feeding roll, by horizontally cutting the film and simultaneously welding it along the upper edge thereof. The bag is then force-fitted on the pallet-stacked load, until it surrounds the load completely.

When a heat-shrinkable film is used, the final step of the wrapping consists in the tight closure of the bag on the load, which is carried out subjecting the wrapping film to shrinking due to heat application. When a stretchable film is used instead, the bag force-fitting step is preceded by a step of stretching and temporarily opening wide the bag, which bag, during the final step of the wrapping, due to the elastic effect, returns into its initial condition and then automatically shrinks around the load.

Within this last type of apparatuses, two modes of application of the bag exist. One provides for the ruffling of the bag on an adjustable widening frame with the mouth of the bag facing downwards, another provides instead to ruffle the upturned bag, i.e. with the bag mouth facing upwards. This second mode advantageously allows to then capture the welding line of the bag - and the corresponding edge portion above the welding line - between the bag and the load, once the force-fitting step has been completed.

The present invention is designed mainly for a wrapping machine of this last type, wherein the bag is ruffled upside down and turned inside-out during the force-fitting step on the load.

An exemplary machine of this type is the one illustrated in detail in application EP-A1-1.510.460, in the same Applicant's name, which is hereby incorporated by reference.

This machine has an adjustable widening frame consisting, in a nutshell, of four angular collection devices or posts which can be mutually opened wide/drawn closer together in order to open wide/release the bag during the force-fitting step, respectively. Four telescopic rods connecting the four angular devices or posts at the lower base are further provided. The telescopic rods have the function of circumferentially guiding the plastic film of the bag along the perimeter of the widening structure, as it is turned inside-out on the load, so as to avoid the formation of wide pockets along the turned-up edge, which would end up becoming entangled in the load or forming undesirable folds in the wrapping.

Such rods are telescopic because they are to allow the mutual coming closer/drawing apart of the respective angular devices for collection.

However, the Applicant has detected that the size requirements which such telescopic rods are to comply with - in terms of overall length, working extension and sturdiness - result in a critical configuration, i.e. a configuration which risks producing jamming during operation of the rods. This event is particularly dangerous because the motor for moving the angular devices is rather powerful - in order to be capable of opening the plastic bag sufficiently wide - and might hence load the telescopic rods, accidentally jammed during closure, up to the maximum compressive stress limit value, causing system buckling.

Moreover such telescopic system is costly.

It is hence an object of the present invention to solve these drawbacks, providing an alternative device to telescopic rods, which allows to achieve the same functionality, but with greater cost-effectiveness, simplicity and without the possibility of undesired jamming.

Such object is achieved through a device as described in its essential features in the accompanying claims.

In particular, according to a first aspect of the invention, a device for the opening wide of a stretchable plastic bag in a wrapping machine is provided, of the type comprising four angular collection assemblies which are mutually orthogonally displaceable of a perpendicular motion, capable of keeping ruffled and opening wide a bag of stretchable plastic film before applying the same to a load to be wrapped, and connection means between the four collection assemblies capable of defining a mouth perimeter, wherein said connection means are formed as cords, kept taut between said collection assemblies in their lower portion.

Other inventive aspects of the device according to the invention are described in the dependent claims.

Further features and advantages of the invention will in any case be more evident from the following detailed description of some preferred embodiments, given by way of example, when taken also in conjunction with the accompanying drawings, wherein:

fig. 1 is an elevation side, partly sectioned, view of the apparatus according to the invention; and

fig. 2 is a top plan view of the device of fig. 1.

The reference device is thoroughly described in European patent application no. 04103938.

The wrapping apparatus has four collection assemblies 23, 24, 25 and 26, arranged at the four angles of an adjustable widening frame. The collection assemblies are mounted on respective carriages slidingly supported, in pairs, on transfer crossmembers, in a way specularly symmetrical with respect to the symmetry axes X-X' and Y-Y'.

The movement of the crossmembers, which causes the mutual coming closer and the drawing apart of the angular posts for collection, occurs under the control of two respective motors, actuated in perfect parallelism, each in correspondence of its respective crossmember and by means of two respective transmission chains (not shown).

According to a first embodiment of the invention, each collection assembly has two pairs of small transmission pulleys P1-P4 (in the drawings only three of these pulleys are visible), each pair arranged on each of the two perpendicular sides of the angular post for collection.

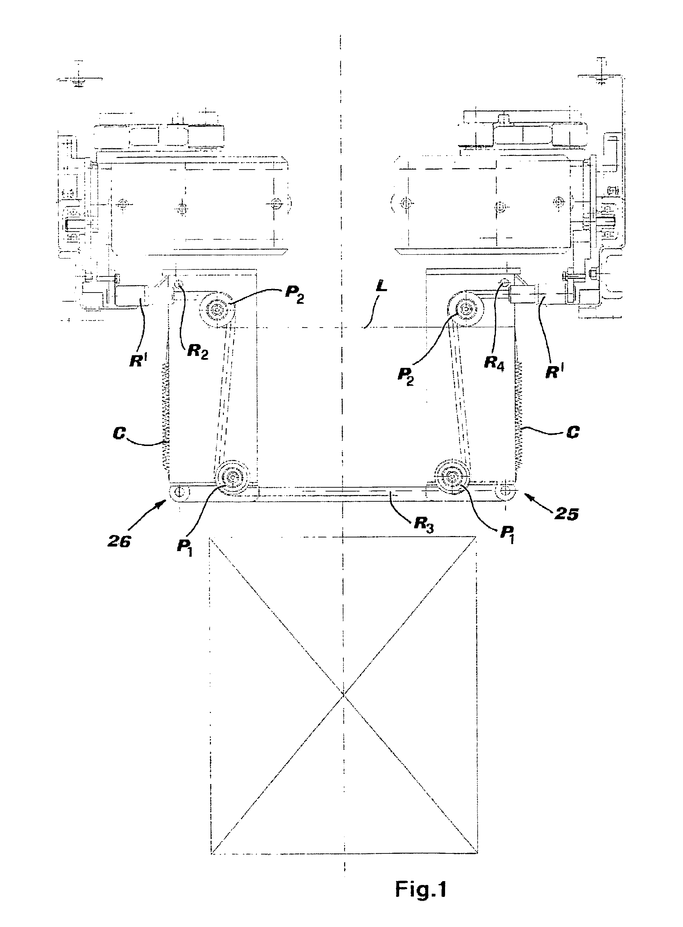

As can be seen in fig. 1, each pair of pulleys P1-P2 (or P3-P4, not visible) is arranged vertically along the height of the angular post. In particular, a first idle pulley P1 is arranged in the proximity of the lower side of the angular post, while the second idle pulley P2 is arranged in the upper portion of the angular post, at such a height that at least the upper portion of the groove thereof projects beyond the upper height limit L of a bag C being ruffled on the collection post.

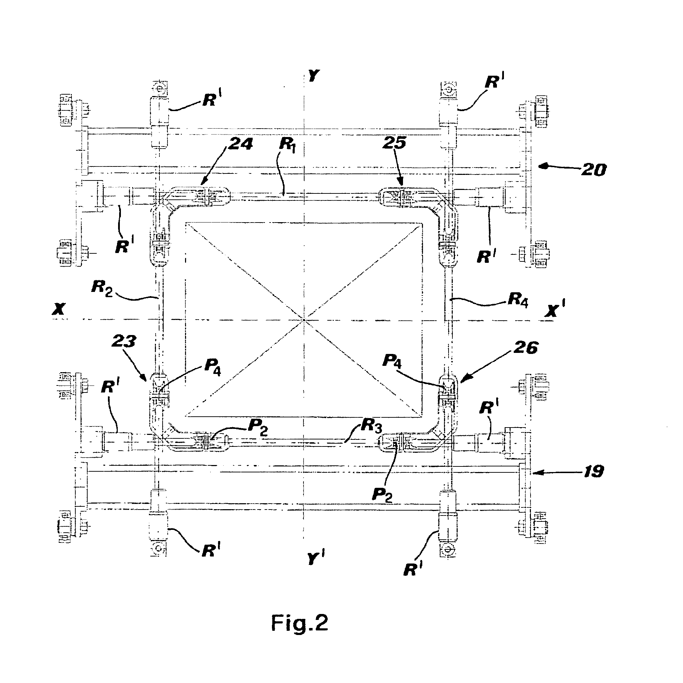

As can be clearly detected in fig. 2, the small pulleys are arranged on the inner side of the collection posts, so as not to interfere with the outer surface of the angular posts whereon the stretchable plastic film bag C is intended to glide.

A cord R extends, in the form of a rope among the opposite pairs of pulleys, the ends of such cord having terminals R' fastened to anchoring points of the main support frame portions which do not displace each other in the direction of the cord during operation. For example (fig. 2) the terminals R' of two parallel cords R1 and R3 are fastened to two crossmembers 19 and 20 which move only in a perpendicular direction (Y-Y') to the cord extension direction.

Terminals R' are preferably of a type which can be adjusted lengthwise, for example consisting of a fixed bush and of a tightening head on the cord which can be screwed more or less fully into the fixed bush: this allows to adjust the cord tension even after mounting of the same. In other words, it is preferable for the terminals to be formed as tensioners.

Each cord R extends between the two fixed terminals R', running along two aligned sides of two opposite angular collecting posts. In particular, each cord runs above the upper pulleys P2 of the two angular posts and below the respective lower pulleys P1, in a typical reverse Ω arrangement. Thereby a portion of lower cord R between the two opposite angular posts is always kept taut (fig. 1).

On the other hand, the coming closer/drawing apart of two opposite angular posts does not affect the tension of cord R, since the terminals R' thereof remain locked in fixed positions: the respective angular assemblies hence move freely along the cord, also thanks to the free rotation of pulleys P1 and P2.

As visible in fig. 2, according to this embodiment, four cords R1-R4 are pre-arranged, one for each of the four perimeter sides defining the opened-wide mouth of the stretchable bag.

The cords are arranged to cooperate with stretchable bag C only by their lower portion. As a matter of fact, for the remaining part cords R1-R4 run along a path inside the angular collecting posts and then above the upper height limit L of bag C when ruffled on the angular posts.

Advantageously, according to a preferred variant, the angular posts for collection have a box-like structure, which, however, is open below and above along the two perpendicular sides in order to allow the exit of the two mutually perpendicular cords, for example cords R3 and R4, from angular post 26. Through this layout, good protection both of the cords and of the pulleys is achieved, thereby avoiding any interference with other members of the machine or with stretchable bag C.

During operation, the lower portions of cords R1-R4 extending between collection assemblies 23-26, if kept sufficiently taut, serve very well the function played by prior-art, telescopic tubular rods. As a matter of fact, they complete the rectangular lower perimeter of the adjustable widening system, and hence guide the turn-up of the stretchable bag during the application on the load, preventing the building of pockets or other folds in the bag which would make the final wrapping defective.

Since the cords replace the mutually-gliding, rigid, mechanical components of the telescopic rods, any risk of jamming or other undesired malfunctioning is fully removed.

According to another preferred embodiment of the invention, the cords are formed as metal chains, preferably transmission chains. In this case, the pulleys guiding the cord are shaped as idle gear wheels.

The metal chains have the further advantage of a very limited wear, even following repeated rubbing against the plastic film of the bags formed with the apparatus, to the benefit of maintenance economy.

However, it is understood that the protection of the invention described above is not limited to the particular embodiments shown, which are to be intended as exemplifying and not as limiting, but extends to any other equivalent construction variant which falls within the scope of the accompanying claims.

## Claims

1. Adjustable widening device for a stretchable plastic bag in a wrapping machine, of the type comprising four angular collection assemblies (23-26) mutually orthogonally displaceable, capable of holding ruffled a stretchable bag and of opening wide before applying said bag to the load to be wrapped, and connection means between the four collection assemblies (23-26) capable of defining a mouth perimeter of the device, **characterised in that** said connection means are formed as cords (R1-R4), kept taut between said collection assemblies in their lower portion.

2. Device as claimed in claim 1), wherein said cords (R1-R4) are kept taut between anchoring points, integral with said wrapping machine, at a respective fixed distance and each running on at least two idle wheels (P1) arranged in the lower portion of two opposite ones of said collection assemblies (23-26).

3. Device as claimed in claim 2), wherein each collection assembly further has a second upper wheel (P2), arranged on the path of said cord (R) between the first wheel (P1) and an anchoring point.

4. Device as claimed in claim 3), wherein each angular collection assembly is formed as an angular, L-shaped post and has a first pair of wheels (P1, P2) on one side and a second pair of wheels (P1, P2) on another perpendicular side.

5. Device as claimed in claim 3) or 4), wherein said upper wheels (P2) are mounted idle on said angular assemblies at such a height that the cord running to its anchoring point can remain above an upper height limit (L) which a ruffled stretchable bag takes up on said collection assemblies.

6. Device as claimed in any one of claims 1) to 5), wherein said cords (R1-R4) have end terminals (R') through which they are fastened to said anchoring points, said terminals (R') being shaped as tensioners.

7. Device as claimed in any one of the preceding claims, wherein said wheels (P1, P2) are pulleys and said cords (R1-R4) are ropes.

8. Device as claimed in any one of claims 1) to 6), wherein said wheels (P1, P2) are gear wheels and said cords (R1-R4) are metal chains.

## Patentansprüche

1. Einstellbare Aufweitvorrichtung für einen dehnbaren Kunststoffbeutel in einer Umhüllungsmaschine, der Bauart, die vier winkelförmige Aufnahmeanordnungen (23-26) aufweist, die in Bezug zueinander in senkrechten Richtungen verlagerbar sind, und die in der Lage ist, einen dehnbaren Beutel aufgerafft zu halten und weit zu öffnen, bevor der genannte Beutel auf die zu umhüllende Ladung aufgebracht wird, und mit Verbindungsmitteln zwischen den vier Aufnahmeeinrichtungen (23-26), die in der Lage sind, einen Mündungsumfang der Vorrichtung festzulegen, **dadurch gekennzeichnet, dass** die genannten Verbindungsmittel als Zugstränge (R1-R4) ausgebildet sind, die zwischen den genannten Aufnahmeanordnungen in deren unterem Bereich gespannt gehalten sind.

2. Vorrichtung nach Anspruch 1, **dadurch gekennzeichnet, dass** die genannten Zugstränge (R1-R4) zwischen Verankerungspunkten gespannt gehalten sind, die fest mit der genannten Umhüllungsmaschine verbunden sind, an einem jeweiligen festen Abstand, wobei jede auf zumindest zwei freilaufenden Rollen (P1) läuft, die in dem unteren Abschnitt von zwei gegenüberliegenden der genannten Aufnahmeanordnungen (23-26) angeordnet sind.

3. Vorrichtung nach Anspruch 2, **dadurch gekennzeichnet, dass** jede Aufnahmeanordnung weiterhin über eine zweite obere Rolle (P2) verfügt, die auf dem Weg des genannten Zugstrangs (R) zwischen der ersten Rolle (P1) und einem Verankerungspunkt angeordnet ist.

4. Vorrichtung nach Anspruch 3, **dadurch gekennzeichnet, dass** jede winkelförmige Aufnahmeanordnung in Form einer winkelförmigen, L-förmigen Strebe ausgebildet ist und mit einem ersten Paar von Rollen (P1, P2) auf einer Seite und einem zweiten Paar von Rollen (P1, P2) auf einer anderen, dazu senkrechten Seite versehen ist.

5. Vorrichtung nach Anspruch 3 oder 4, **dadurch gekennzeichnet, dass** die genannten oberen Rollen (P2) freilaufend auf den genannten winkelförmigen Anordnungen in einer solchen Höhe angebracht sind, dass der Zugstrang, der zu seinem Verankerungspunkt verläuft, oberhalb einer oberen Höhengrenze (L) verbleiben kann, die ein geraffter dehnbarer Beutel auf den genannten Aufnahmeanordnungen einnimmt.

6. Vorrichtung nach einem der Ansprüche 1 bis 5, **dadurch gekennzeichnet, dass** die genannten Zugstränge (R1-R4) Endpunkte (R') aufweisen, mit denen sie an den genannten Verankerungspunkten befestigt sind, wobei die genannten Endpunkte (R') als Spanner ausgebildet sind.

7. Vorrichtung nach einem der vorangehenden Ansprüche, **dadurch gekennzeichnet, dass** die genannten Rollen (P1, P2) Seilrollen sind, und dass die genannten Zugstränge (R1-R4) Seile sind.

8. Vorrichtung nach einem der Ansprüche 1 bis 6, **dadurch gekennzeichnet, dass** die genannten Rollen (P1, P2) Zahnräder sind und dass die genannten Zugstränge (R1-R4) metallische Ketten sind.

## Revendications

1. Dispositif d'élargissement réglable pour une house en matière plastique étirable dans une machine d'enveloppement, du type comportant quatre ensembles collecteurs angulaires (23-26) pouvant être déplacés de façon mutuellement orthogonale, capables de maintenir plissée une housse étirable et de l'ouvrir largement avant d'appliquer ladite housse sur la charge devant être enveloppée, et des moyens de liaison entre les quatre ensembles collecteurs (23-26) capables de définir un paramètre d'embouchure du dispositif, **caractérisé en ce que** lesdits moyens de liaison sont réalisés sous la forme de liens (R1-R4) maintenus tendus entre lesdits ensembles collecteurs dans leur partie inférieure.

2. Dispositif selon la revendication 1, dans lequel lesdits liens (R1-R4) sont maintenus tendus entre des points d'ancrage, intégrés à ladite machine d'enveloppement, à une distance respective fixe et passent chacun sur au moins deux roues folles (P1) agencées dans la partie inférieure de deux, opposés, desdits ensembles collecteurs (23-26).

3. Dispositif selon la revendication 2, dans lequel chaque ensemble collecteur comporte en outre une seconde roue supérieure (P2), agencée sur le trajet dudit lien (R) entre la première roue (P1) et un point d'ancrage.

4. Dispositif selon la revendication 3, dans lequel chaque ensemble collecteur angulaire est réalisé sous la forme d'un montant angulaire en forme de L et comporte une première paire de roues (P1, P2) sur un côté et une seconde paire de roues (P1, P2) sur un autre côté, perpendiculaire.

5. Dispositif selon la revendication 3 ou 4, dans lequel lesdites roues supérieures (P2) sont montées folles sur lesdits ensembles angulaires à une hauteur telle que le lien s'étendant jusqu'à son point d'ancrage peut rester au-dessus d'une hauteur limite supérieure (L) qu'une housse étirable plissée atteint sur lesdits ensembles collecteurs.

6. Dispositif selon l'une quelconque des revendications 1 à 5, dans lequel lesdits liens (R1-R4) comportent des embouts d'extrémité (R') par lesquels ils sont fixés auxdits points d'ancrage, lesdits embouts (R') étant réalisés sous la forme de tendeurs.

7. Dispositif selon l'une quelconque des revendications précédentes, dans lequel lesdites roues (P1, P2) sont des poulies et lesdits liens (R1-R4) sont des câbles.

8. Dispositif selon l'une quelconque des revendications 1 à 6, dans lequel lesdites roues (P1, P2) sont des roues dentées et lesdits liens (R1-R4) sont des chaînes métalliques.
